# EUROPEAN PATENT APPLICATION

(11) **EP 2 821 894 A1**
(43) Date of publication of application: **07.01.2015**
(21) Application number: 14173046.5
(22) Date of filing: 18.06.2014
(51) Int. Cl.: G06F 3/02, G07F 7/08

(54) **A keypad**

(30) Priority: 02.07.2013 US 201313933781
(71) Applicant: VeriFone, Inc., San Jose CA 95110 (US)
(72) Inventor: Grenfell, Jack Richard, Rocklin, CA 95765 (US)
(74) Representative: Evens, Paul Jonathan

(57) **Abstract**

A keypad (100) including a keypad housing (102,103), an array of data entry key assemblies (144,170) mounted in the keypad housing, each of the data entry key assemblies (144,170) being designated by at least two indices and including at least two mutually electrically insulated electrical contacts (162,163), each electrical contact being identified by one of the at least two indices and an electrically conductive element (144) which, when depressed, is electrically coupled to the at least two mutually electrically insulated electrical contacts (162,163) and an electrical circuit coupled to the array of data entry key assemblies, sensing a voltage state of specific ones of the at least two mutually electrically insulated electrical contacts, identified by specific ones of the indices, caused by depression of a specific electrically conductive element and indicating by the at least two indices the identity of a specific one of the data entry key assemblies which is actuated.

## Description

### FIELD OF THE INVENTION

The present invention relates to keypads generally.

### BACKGROUND OF THE INVENTION

Various types of keypads are known.

### SUMMARY OF THE INVENTION

The present invention seeks to provide an improved keypad.

There is thus provided in accordance with a preferred embodiment of the present invention a keypad including a keypad housing, an array of data entry key assemblies mounted in the keypad housing, each of the data entry key assemblies being designated by at least two indices and including at least two mutually electrically insulated electrical contacts, each electrical contact being identified by one of the at least two indices and an electrically conductive element which, when depressed, is electrically coupled to the at least two mutually electrically insulated electrical contacts and an electrical circuit coupled to the array of data entry key assemblies, sensing a voltage state of specific ones of the at least two mutually electrically insulated electrical contacts, identified by specific ones of the indices, caused by depression of a specific electrically conductive element and indicating by the at least two indices the identity of a specific one of the data entry key assemblies which is actuated.

Preferably, the electrically conductive element is maintained at a first voltage when not depressed and, when depressed, is electrically coupled to the at least two mutually electrically insulated electrical contacts and is maintained at the first voltage.

In accordance with a preferred embodiment of the present invention the electrically conductive element includes a resiliently deformable electrically conductive element. Alternatively, the electrically conductive element is formed on a resiliently deformable element.

Preferably, at least one of the data entry key assemblies includes at least three mutually electrically insulated electrical contacts. Additionally, at least one of the at least three mutually electrically insulated electrical contacts is employed to provide power up/down functionality.

In accordance with a preferred embodiment of the present invention the keypad also includes an array of case-open switch assemblies mounted in the keypad housing, each of the case-open switch assemblies being designated by at least two indices and including at least two mutually electrically insulated electrical contacts, each electrical contact being identified by one of the at least two indices and an electrically conductive element which, when depressed, is electrically coupled to the at least two mutually electrically insulated electrical contacts and an electrical circuit coupled to the array of case-open switch assemblies, sensing a voltage state of specific ones of the at least two mutually electrically insulated electrical contacts, identified by specific ones of the indices, caused by mutual disengagement of the at least two mutually electrically insulated electrical contacts and indicating by the at least two indices the identity of a specific one of the case-open switch assemblies which is open.

Preferably, the electrically conductive element of the array of case-open switch assemblies includes a resiliently deformable electrically conductive element and an electrical contact portion formed thereon and the electrically conductive element of the array of case-open switch assemblies is electrically insulated from the electrical contact portion by an electrically insulative layer. Additionally, a first and a second of the at least two mutually electrically insulated electrical contacts of the array of case-open switch assemblies are respectively coupled to at least first and second voltages, the electrically conductive element is arranged to limit unauthorized physical access to the at least two mutually electrically insulated electrical contacts and is maintained at a third voltage, different from the first and second voltages and the electrically conductive element has at least two mechanical states: a non-depressed state in which it is not in galvanic contact with either of the at least two electrically insulated electrical contacts and is maintained at the third voltage and a depressed state in which it is in galvanic contact with at least one of the at least two electrically insulated electrical contacts and is maintained at the third voltage.

In accordance with a preferred embodiment of the present invention the at least two mutually electrically insulated electrical contacts are coupled to a first voltage and the resiliently deformable electrically conductive element is coupled to a second voltage, wherein one of the first and second voltages is ground and the other of the first and second voltages is not ground. Additionally, the at least two mutually electrically insulated electrical contacts are coupled to a voltage other than ground and the resiliently deformable electrically conductive element is coupled to ground. Alternatively, the at least two mutually electrically insulated electrical contacts are coupled to ground and the resiliently deformable electrically conductive element is coupled to a voltage other than ground.

Preferably, the at least two mutually electrically insulated electrical contacts are maintained in a logical high state other than when they are in electrical contact with the resiliently deformable electrically conductive element. Alternatively, the at least two mutually electrically insulated electrical contacts are maintained in a logical low state other than when they are in electrical contact with the resiliently deformable electrically conductive element.

In accordance with a preferred embodiment of the present invention, the resiliently deformable electrically conductive element physically at least partially surrounds the at least two mutually electrically insulated electrical contacts, thereby preventing unauthorized physical or electrical contact therewith. Additionally, the electrically conductive element cooperates with a printed circuit board onto which the at least two mutually electrically insulated electrical contacts are formed to fully surround the at least two mutually electrically insulated electrical contacts.

Preferably, the array of data entry key assemblies is mounted on a printed circuit board in the keypad housing, the at least two mutually electrically insulated electrical contacts are formed on the printed circuit board and the electrically conductive element cooperates with the printed circuit board to fully surround the at least two mutually electrically insulated electrical contacts.

In accordance with a preferred embodiment of the present invention the electrical circuit is operative to sense at least near simultaneous electrical engagement between the resiliently deformable electrically conductive element and both of the at least two mutually electrically insulated electrical contacts.

Preferably, the keypad also includes an anti-tampering grid at least partially enclosing the array of data entry key assemblies. Additionally, the anti-tampering grid is coupled to tamper indicating apparatus.

There is also provided in accordance with another preferred embodiment of the present invention a secure keypad including a keypad housing, an array of secure data entry key assemblies mounted in the keypad housing, each of the secure data entry key assemblies being designated by at least two indices and including at least two mutually electrically insulated non-grounded electrical contacts, each being identified by one of the at least two indices and a resiliently deformable electrically conductive element which is coupled to ground and which, when depressed, grounds the at least two mutually electrically insulated non-grounded electrical contacts, the resiliently deformable electrically conductive element physically at least partially surrounding the at least two mutually electrically insulated non-grounded electrical contacts and preventing unauthorized physical or electrical contact therewith and an electrical circuit coupled to the array of secure data entry key assemblies, sensing grounding of specific ones of the at least two mutually electrically insulated non-grounded electrical contacts, identified by specific ones of the indices, caused by depression of a specific resiliently deformable electrically conductive element and indicating by the at least two indices the identity of a specific one of the secure data entry key assemblies which is actuated.

Preferably, the array of secure data entry key assemblies is mounted on a printed circuit board in the keypad housing, the at least two mutually electrically insulated non-grounded electrical contacts are formed on the printed circuit board, a grounded conductive circumferential element is formed on the printed circuit board surrounding the at least two mutually electrically insulated non-grounded electrical contacts and the resiliently deformable conductive element is sealed to the grounded conductive circumferential element.

In accordance with a preferred embodiment of the present invention the at least two mutually electrically insulated non-grounded electrical contacts include two mutually electrically insulated non-grounded electrical contacts which are each in the form of a semicircle.

Preferably, the array of data entry key assemblies is arranged in columns and rows and the at least two indices include a row index and a column index.

In accordance with a preferred embodiment of the present invention the at least two mutually electrically insulated non-grounded electrical contacts are maintained in a logical high state other than when they are in electrical contact with the resiliently deformable conductive element.

Preferably, the electrical circuit is operative to sense at least near simultaneous grounding of the at least two mutually electrically insulated non-grounded electrical contacts.

In accordance with a preferred embodiment of the present invention the secure keypad also includes an anti-tampering grid at least partially enclosing the array of secure data entry key assemblies. Additionally, the anti-tampering grid is coupled to tamper indicating apparatus.

There is further provided in accordance with yet another preferred embodiment of the present invention a tamper-resistant switch including at least first and second mutually electrically insulated electrical contacts respectively coupled to at least first and second voltages and an electrically conductive element, arranged to limit unauthorized physical access to the first and second mutually electrically insulated electrical contacts, which electrically conductive element is maintained at a third voltage, different from the first and second voltages, the electrically conductive element having at least two mechanical states: a non-depressed state in which it is not in galvanic contact with either of the at least first and second electrically insulated electrical contacts and is maintained at the third voltage and a depressed state in which it is in galvanic contact with at least one of the at least first and second electrically insulated electrical contacts and is maintained at the third voltage.

Preferably, the electrically conductive element, when in the depressed state, is in at least near simultaneous contact with at least two of the at least first and second electrically insulated electrical contacts.

In accordance with a preferred embodiment of the present invention the electrically conductive element includes a resiliently deformable electrically conductive element and an electrical contact portion formed thereon and the electrically conductive element is electrically insulated from the electrical contact portion by an electrically insulative layer.

### BRIEF DESCRIPTION OF THE DRAWINGS

The present invention will be understood and appreciated more fully from the following detailed description, taken in conjunction with the drawings in which:
Figs. 1A & 1B are simplified illustrations of a keypad constructed and operative in accordance with a preferred embodiment of the present invention;
Figs. 2A and 2B are simplified plan view illustrations of a dome forming part of a data entry key assembly in the keypad of Figs. 1A & 1B;
Figs. 3A and 3B are simplified perspective view illustrations of the dome of Figs. 2A & 2B, forming part of a data entry key assembly of Figs. 1A & 1B;
Figs. 4A and 4B are simplified electrical diagrams of a data entry key portion of the keypad of Figs. 1A - 3B in accordance with two alternative embodiments of the present invention;
Figs. 5A and 5B are simplified plan view illustrations of a dome forming part of a case-open switch in the keypad of Figs. 1A & 1B;
Figs. 6A and 6B are simplified perspective view illustrations of the dome of Figs. 5A & 5B, forming part of the case-open switch of Figs. 1A, 1B; and
Fig. 7 is a simplified electrical diagram of an anti-tampering, case-open switch portion of the keypad of Figs. 1A - 6B.

### DETAILED DESCRIPTION OF PREFERRED EMBODIMENTS

The present invention seeks to provide a new keypad, especially a secure keypad comprising an improved security system. The keypad may be used with electronic devices, for example tamper-protected point of sale terminals and other devices containing sensitive information, such as personal data and encryption keys. For the purposes of the present description and claims, the term "point of sale terminals" includes, inter alia, PIN pads, electronic cash registers, ATMs, card payment terminals and the like and the term "keyboards" includes alpha-numeric input devices useful for a wide range of applications. Keyboards also include keys having additional functionality, such as a CANCEL key or an ENTER key.

The point of sale terminals preferably include a housing, an anti-tamper protected enclosure located within the housing and adapted to contain the sensitive information, anti-tamper protection circuitry located within the anti-tamper protected enclosure and case-open switches electrically coupled to the anti-tamper protection circuitry for protecting against unauthorized access to the interior of the anti-tamper protected enclosure.

Preferably, a confidential data storage element is located within the anti-tamper protected enclosure.

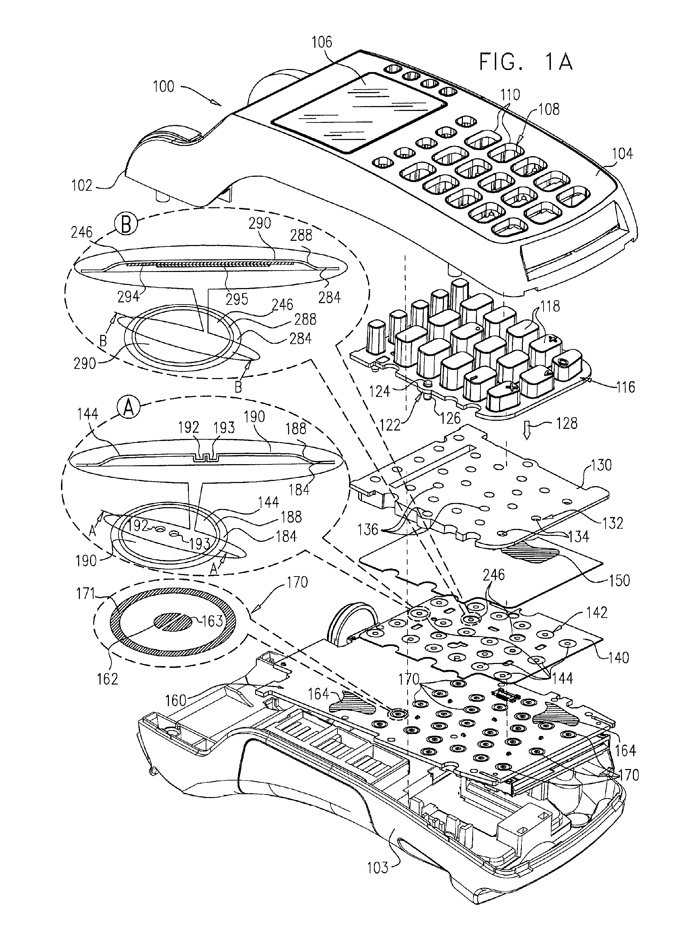

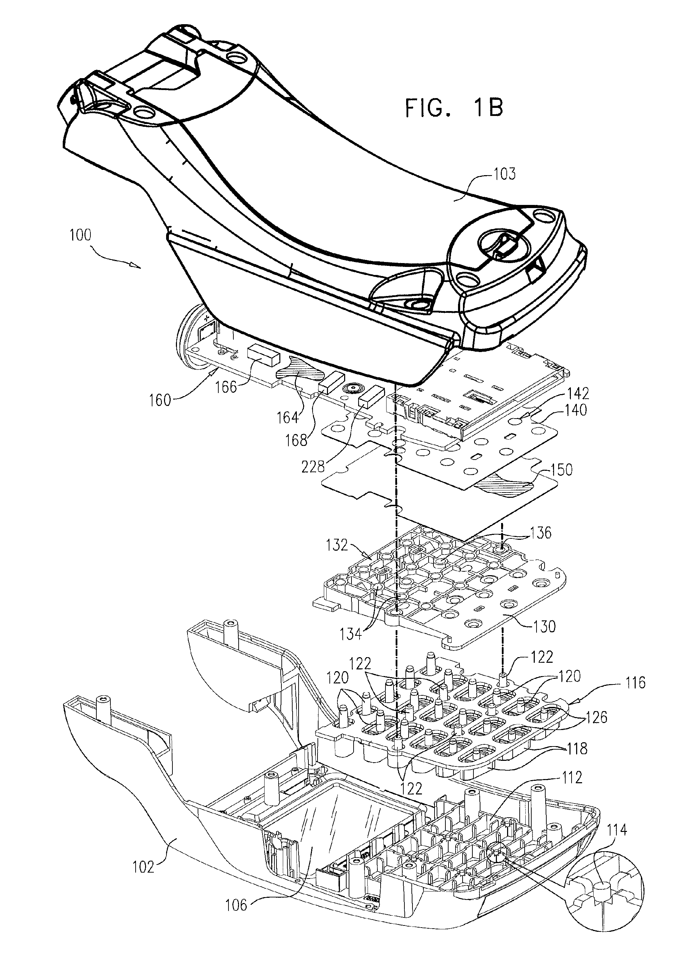

Reference is now made to Figs. 1A and 1B, which illustrate a keypad device constructed and operative in accordance with a preferred embodiment of the present invention.

As seen in Figs. 1A and 1B, there is provided a secure keypad device 100 including a top housing element 102 which, together with a bottom housing element 103, defines a keypad device housing. Housing element 102 includes, on a top surface 104 thereof, a display window 106, through which a display (not shown) may be viewed, and an array 108 of key apertures 110. It is a feature of an embodiment of the present invention that the top housing element 102 preferably includes, on an underside surface 112, thereof a plurality of spaced case-open switch actuation protrusions 114.

A resilient key mat 116, preferably formed of a resilient plastic or rubber, defines a plurality of depressible keys 118, preferably integrally formed with the remainder of key mat 116, which keys partially extend through key apertures 110. Depressible keys 118 each actuate a corresponding data entry key assembly, which is described hereinbelow in greater detail. Each data entry key assembly includes a resiliently deformable conductive element and a conductive contact assembly. Underlying each of keys 118 is a key actuation protrusion 120.

Disposed at multiple locations on key mat 116 are case-open switch actuation responsive displaceable portions 122, each including a top facing protrusion 124, which is engaged by a corresponding case-open switch actuation protrusion 114, and a bottom-facing protrusion 126.

It is a feature of a preferred embodiment of the present invention that when the housing is closed, case-open switch actuation protrusions 114 engage corresponding protrusions 124 and cause displacement of corresponding case-open switch actuation responsive displaceable portions 122 in a direction indicated by an arrow 128. Opening of the housing retracts case-open switch actuation protrusions 114 from corresponding protrusions 124 and enables displacement of corresponding case-open switch actuation responsive displaceable portions 122 in a direction opposite to that indicated by arrow 128 as a result of resilience of the case-open switch actuation responsive displaceable portions 122 and key mat 116.

Underlying key mat 116 is a light guide element 130 which includes an array 132 of apertures 134, which accommodate key actuation protrusions 120. Preferably light guide element 130 also includes a plurality of apertures 136, which accommodate bottom-facing protrusions 126 of case-open switch actuation responsive displaceable portions 122.

Underlying light guide element 130 and preferably adhered to an underside surface thereof is a contact layer 140. Contact layer 140 preferably includes an array 142 of raised resiliently deformable conductive elements 144, which are displaced by key actuation protrusions 120, when data keys 118 are depressed. Deformable conductive elements 144 form part of data entry key assemblies.

Resiliently deformable conductive elements 144, such as domes, are preferably made of carbon, metal or combination of carbon/metal, for example domes commercially available from Snaptron, Inc. of Windsor, Colorado, USA.

In accordance with another preferred embodiment of the present invention, deformable conductive elements 144 may be formed by coating a resilient, deformable non-conductive element with a conductive layer.

In another alternative embodiment, the domes may all be formed as deformable protrusions on a single, integrally formed, generally planar conductive substrate.

As a further alternative, resiliently deformable conductive elements having a non-spherical configuration, such as elements having a rectangular or elliptical footprint, may be employed as appropriate.

As a still further alternative, raised resiliently deformable conductive elements 144 may be discrete elements separate from contact layer 140, as shown, for example, in U.S. Patent 8,358,218, the disclosure of which is hereby incorporated by reference.

An anti-tampering grid 150, preferably formed of a multiplicity of interconnected anti-tampering electrical conductors in a flexible printed circuit board (FPCB) is preferably provided between the light guide element 130 and the contact layer 140.

Underlying contact layer 140 is an electrical circuit board 160. Electrical circuit board 160 preferably includes an anti-tampering grid 164 formed of a multiplicity of interconnected anti-tampering electrical conductors. The anti-tampering grids 150 and 164 are coupled to anti-tampering detection circuitry 166.

It is a particular feature of the present invention that index-based key actuation detection circuitry 168 is also provided, preferably on circuit board 160.

Circuitry 168 preferably senses depression of each specific resiliently deformable conductive element 144 by detecting both the row and the column of each data entry key assembly 120 actuated thereby as designated by at least two indices. It is a particular feature of circuitry 168 that it does not require scanning of either rows or columns of data entry key assemblies and thus avoids security issues associated therewith.

The prior art scanning procedure is described, inter alia, in U.S. Patent No. 5,070,330, the disclosure of which is hereby incorporated by reference.

An example of a commercially available circuit for circuitry 168 is a microcontroller having at least 8 GPIO contacts for reading at least 4 rows and 4 column signals, such as a MSP430, commercially available from Texas Instruments, Dallas, Texas, USA.

Secure keypad device 100 also preferably includes power management circuitry (PMC) 228, preferably on circuit board 160. Alternatively, the functionality of PMC 228 may be included in circuitry 168.

Electrical circuit board 160 functions, inter alia, as a contact pad board and includes conductive contact assemblies 170, each forming part of a corresponding data entry key assembly. Additional conductive contact assemblies 170 also each form part of a corresponding case-open detection assembly.

Each conductive contact assembly 170 preferably includes a pair of electrical contact pads 162 and 163, typically each in the form of a mutually spaced and mutually electrically insulated semicircle, and at least one at least partially circumferential conductor, preferably in the form of a ring 171. It is appreciated that rings 171 may all be electrically interconnected and thus maintained at the same potential or at ground.

Preferably each pair of adjacent electrical contact pads 162 and 163 and ring 171 underlies a corresponding deformable conductive element 144, which forms part of a data entry key assembly. The arrangement of contact layer 140 and of electrical circuit board 160 is such that depression of a key 118 by the finger of a user causes the dome to establish electrical contact with a corresponding pair of electrical contact pads 162 and 163 lying thereunder and at least generally in registration therewith. When key 118 is not depressed, no electrical contact exists between the dome and the pair of corresponding electrical contact pads 162 and 163.

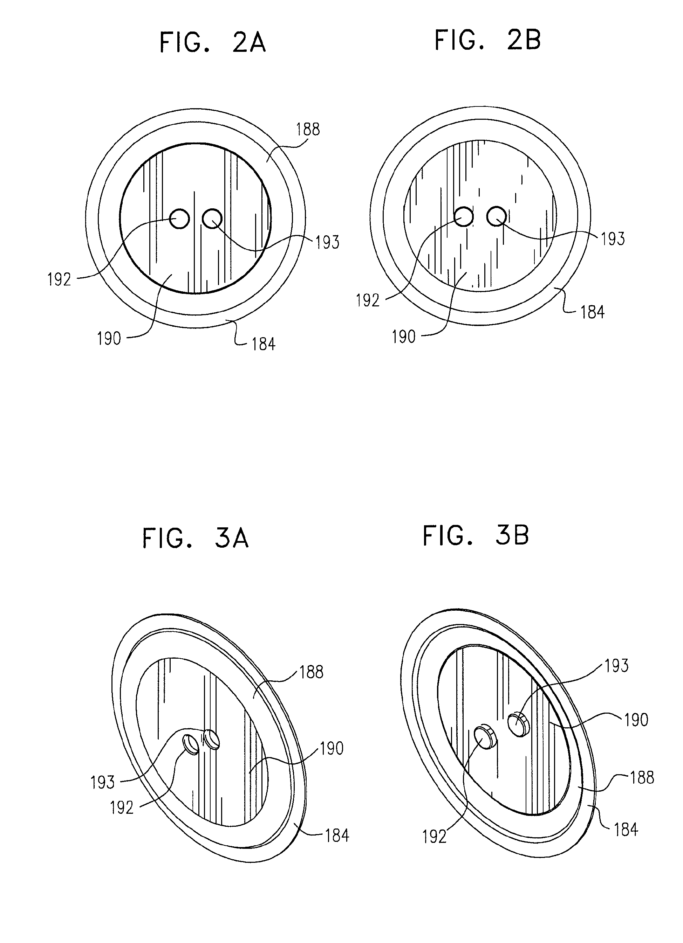

Reference is now made additionally to Figs. 2A, 2B, 3A & 3B, which illustrate resiliently deformable conductive elements 144 shown at enlargement A in Fig. 1A. Elements 144, such as domes, preferably each include an at least partially continuous circumferential flange portion 184 which may be fixed to ring 171, a tapered circumferential portion 188, and a central portion 190 disposed in a normally non-depressed operative orientation at a first perpendicular distance from the electrical contact pads 162 and 163.

Accordingly, in the operation of resiliently deformable conductive elements 144, depression of a key 118 by the finger of a user causes the dome to establish electrical contact with a corresponding pair of electrical contact pads 162 and 163 lying thereunder and thus establishes electrical contact between each of contact pads 162 and 163 and ring 171 via flange portion 184.

Optionally, a pair of contact protrusions 192 and 193 are located interiorly of the central portion and disposed in a normally non-depressed operative orientation at a second perpendicular distance from respective electrical contact pads 162 and 163, which second perpendicular distance is less than said first perpendicular distance. As a further alternative, contact portions 192 and 193 may be replaced by a suitably configured single contact portion.

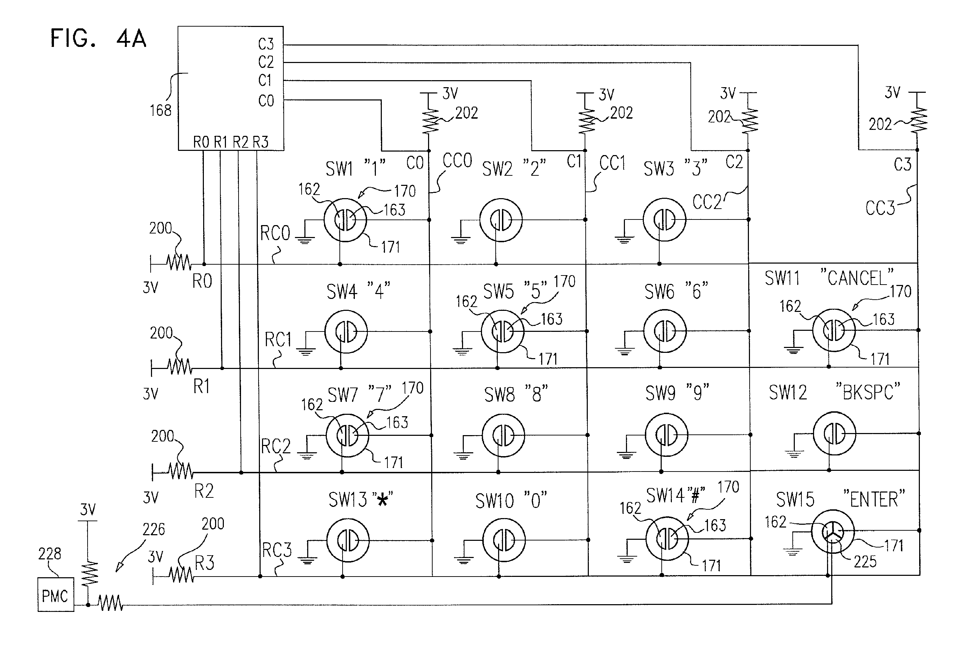

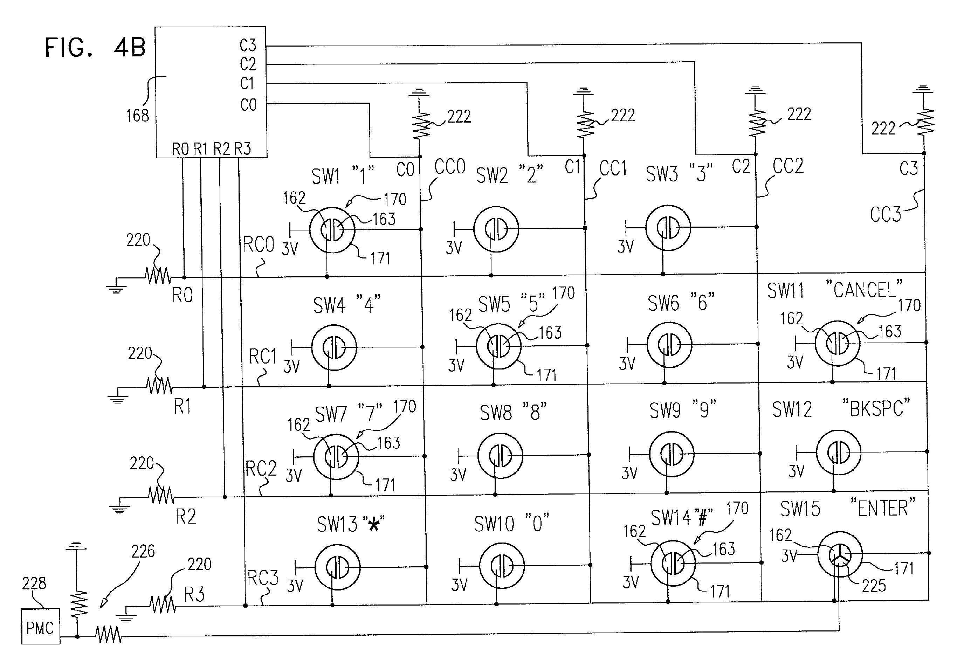

Reference is now made to Figs. 4A and 4B, which are simplified electrical diagrams of a data entry key portion of the keypad of Figs. 1 - 3B in accordance with two alternative embodiments of the present invention.

Turning initially to Fig. 4A, there is seen a typical PINpad keypad which includes fifteen switches, representing numerals "0" - "9" , and symbols, typically "*" and "#", as well as various basic functions such as "CANCEL", backspace, e.g. "BKSPC", and "ENTER".

It is appreciated that each of the fifteen switches is preferably embodied in a data entry key assembly described hereinabove with reference to Fig. 1A, which includes a conductive contact assembly 170 having a pair of electrical contact pads 162 and 163. Each conductive contact assembly 170 is identified by at least two indices, typically a row index and a column index. In the illustrated embodiment, each of electric contact pads 162 is designated by a specific row index and each of electric contact pads 163 is designated by a specific column index. It is thus understood that each key entry is characterized by a pair of indices, namely a specific row index and a specific column index.

The fifteen switches are preferably arranged in a matrix arrangement having four columns, here designated C0, C1, C2 and C3 and four rows, here designated R0, R1, R2 and R3.

In the illustrated embodiment, each of contact pads 162 is connected to one row conductor among four row conductors RC0, RC1, RC2 and RC3 corresponding to rows R0, R1, R2 and R3. Correspondingly, each of contact pads 163 is connected to one column conductor among four column conductors CC0, CC1, CC2 and CC3 corresponding to columns C0, C1, C2 and C3. Each ring 171 is preferably connected to ground.

Preferably each of four row conductors RC0, RC1, RC2 and RC3, corresponding to rows R0, R1, R2 and R3, is connected via a corresponding pull up resistor 200 or a suitable transistor to a positive voltage, such as 3V. Correspondingly, preferably, each of four row conductors CC0, CC1, CC2 and CC3, corresponding to rows C0, C1, C2 and C3, is connected via a corresponding pull up resistor 202 to a positive voltage, such as 3V.

Preferably each of four row conductors RC0, RC1, RC2 and RC3, corresponding to rows R0, R1, R2 and R3, is connected to corresponding terminals R0, R1, R2 and R3 of electrical circuit 168 and each of four row conductors CC0, CC1, CC2 and CC3, corresponding to rows C0, C1, C2 and C3, is connected to corresponding terminals C0, C1, C2 and C3 of electrical circuit 168.

It is appreciated that the various pull up resistors 200 and 202 may alternatively be incorporated into an integrated circuit embodying electrical circuit 168.

Preferably, electrical contact pads 162 and 163 of each switch are maintained in a logical high state other than when they are in electrical contact with a dome. Such electrical contact typically grounds pads 162 and 163 by virtue of the electrical connection between each dome and a corresponding grounded ring 171. Thus it is appreciated that depression of a switch, which produces the electrical contact between a corresponding dome and contact pads 162 and 163, shifts the contact pads 162 and 163 underlying the depressed key from the logical high state to a logical low state.

Turning now to Fig. 4B, there is seen another typical PINpad keypad which includes fifteen switches, representing numerals "0" - "9" , and symbols, typically "*" and "#", as well as various basic functions such as "CANCEL", backspace, e.g. "BKSPC", and "ENTER".

It is appreciated that each of the fifteen switches is preferably embodied in a data entry key assembly described hereinabove with reference to Fig. 1A, which includes a conductive contact assembly 170 having a pair of electrical contact pads 162 and 163. Each conductive contact assembly 170 is identified by at least two indices, typically a row index and a column index. In the illustrated embodiment, each of electric contact pads 162 is designated by a specific row index and each of electric contact pads 163 is designated by a specific column index. It is thus understood that each key entry is characterized by a pair of indices, namely a specific row index and a specific column index.

The fifteen switches are preferably arranged in a matrix arrangement having four columns, here designated C0, C1, C2 and C3 and four rows, here designated R0, R1, R2 and R3. In the illustrated embodiment, each of contact pads 162 is connected to one row conductor among four row conductors RC0, RC1, RC2 and RC3 corresponding to rows R0, R1, R2 and R3. Correspondingly, each of contact pads 163 is connected to one column conductor among four column conductors CC0, CC1, CC2 and CC3 corresponding to columns C0, C1, C2 and C3. Each ring 171 is preferably connected to a positive voltage source, typically 3V.

Preferably each of four row conductors RC0, RC1, RC2 and RC3, corresponding to rows R0, R1, R2 and R3, is connected via a corresponding pull down resistor 220 to ground. Correspondingly, preferably, each of four row conductors CC0, CC1, CC2 and CC3, corresponding to rows C0, C1, C2 and C3, is connected via a corresponding pull down resistor 222 to ground.

Preferably, each of four row conductors RC0, RC1, RC2 and RC3, corresponding to rows R0, R1, R2 and R3, is connected to corresponding terminals R0, R1, R2 and R3 of electrical circuit 168 and each of four row conductors CC0, CC1, CC2 and CC3, corresponding to rows C0, C1, C2 and C3, is connected to corresponding terminals C0, C1, C2 and C3 of electrical circuit 168.

It is appreciated that the various pull down resistors 220 and 222 may alternatively be incorporated into an integrated circuit embodying electrical circuit 168.

Preferably electrical contact pads 162 and 163 of each switch are maintained in a logical low state other than when they are in electrical contact with a dome. Such electrical contact typically couples pads 162 and 163 to a positive voltage by virtue of the electrical connection between each dome and a corresponding ring 171, which is coupled to a positive voltage. Thus it is appreciated that depression of a key, which produces the electrical contact between a corresponding dome and contact pads 162 and 163, shifts the contact pads 162 and 163 underlying the depressed key from the logical low state to a logical high state.

It is appreciated that in accordance with both of the embodiments described hereinabove with reference to Figs. 4A and 4B, electrical circuit 168 is operative to sense at least near simultaneous electrical engagement between the resiliently deformable electrically conductive element 144, such as a dome, and both of the at least two mutually electrically insulated electrical contacts pads 162 and 163. Near simultaneous electrical contact is here defined to mean electrical engagement with both of electrical contact pads 162 and 163 at four sample times within an overall duration of 64 milliseconds.

It is appreciated that circuit 168 monitors the logic states of all of the electrical contact key pads by monitoring the voltage on both row and column conductors and thus indicates which key is depressed without having to scan through either the rows or the columns.

In accordance with both of the embodiments described hereinabove with reference to Figs. 4A and 4B, depression of a data entry key produces a change in the voltage state of one or both of contact pads 162 and 163 without changing the voltage on the dome. This voltage change is readily sensed by electrical circuit 168 but is not readily sensed by an unauthorized tap seeking to access confidential PIN numbers, since the contacts are covered by the dome and the voltage of the dome remains unchanged.

It is appreciated that normally depression of a data entry key also produces an electrical connection between contact pads 162 and 163 but that such electrical connection is not essential to the functioning of electrical circuit 168, which senses changes in voltages at the contact pads 162 and 163 even when they are in mutual electrical contact. It is thus also appreciated that the various contact pads 162 and 163 need not all be maintained at the same voltage, inasmuch as electrical circuit 168 preferably senses a change in voltage thereat. There may be situations wherein the various contact pads are not at the same voltage and are not mutually shorted during key depression.

Additionally, in accordance with an embodiment of the present invention, examples of which are shown in Figs. 4A and 4B, the enter key, also designated as SW 15, may have an additional contact pad 225, which enables the enter key to have an additional function. Additional contact pad 225 is coupled optionally via a voltage divider circuit 226 to power management circuitry (PMC) 228. In accordance with this embodiment, depression of the enter key, SW 15, may be used to provide power up functionality, for example to switch the keypad device on or to cause the keypad device to leave a sleep mode state.

It is thus also appreciated that the contact pad 225 need not be maintained at the same voltage as contact pads 162 and 163, inasmuch as electrical circuit 168 preferably senses a change in voltage thereat.

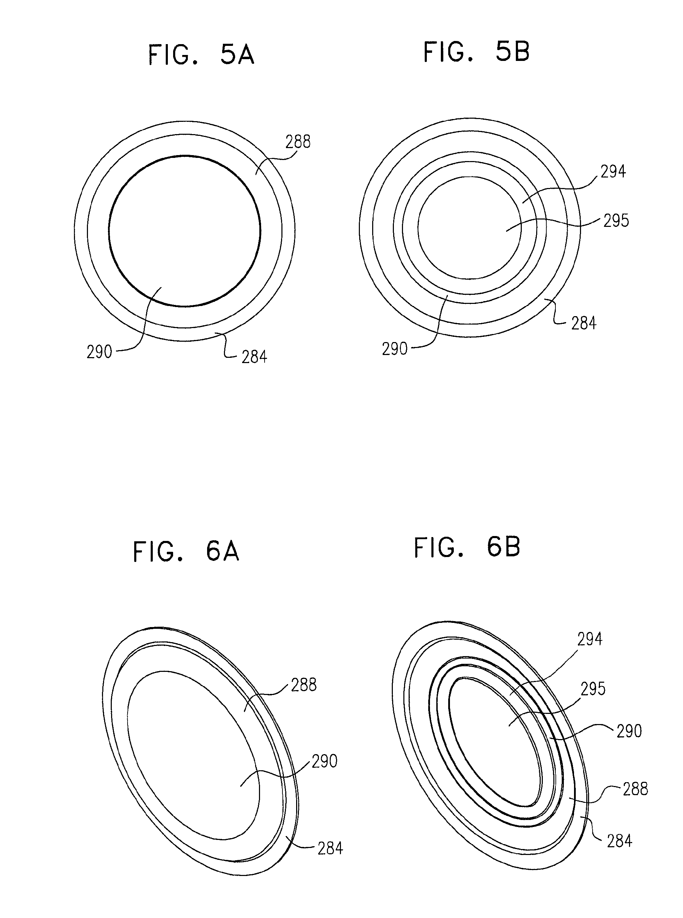

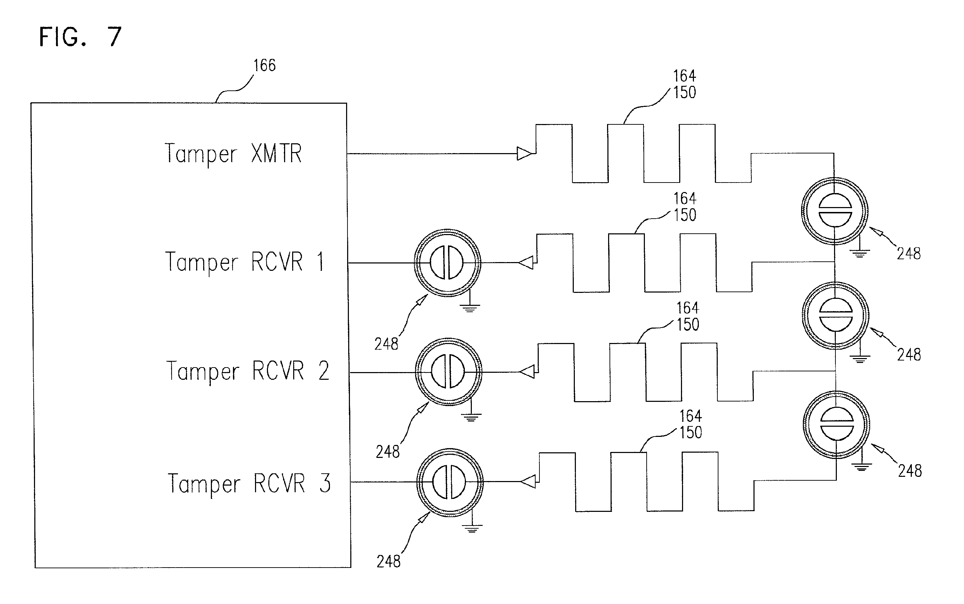

Referring again to Figs. 1A & 1B, particularly to enlargement B in Fig. 1A, and additionally to Figs. 5A, 5B, 6A, 6B and 7, it is seen that contact layer 140 may also include multiple resiliently deformable conductive elements 246, which, together with corresponding conductive contact assemblies 170, form case-open switches 248 (Fig. 7). Resiliently deformable conductive elements 246 are deformed by case-open switch actuation responsive displaceable portions 122 (Fig. 1B) when the housing is closed. Alternatively, resiliently deformable conductive elements 246 may be discrete elements separate from contact layer 140, as shown, for example, in U.S. Patent 8,358,218, the disclosure of which is hereby incorporated by reference.

Referring specifically to enlargement B in Fig. 1A, there is shown a resiliently deformable conductive element 246, particularly suitable for use in the case-open switches in the embodiment of Figs 1A & 1B. The resiliently deformable conductive element 246 preferably includes an at least partially continuous circumferential flange portion 284 which may be fixed to ring 171, a tapered circumferential portion 288, and a central portion 290 disposed in a normally non-depressed operative orientation at a first perpendicular distance from the electrical contact pads 162 and 163. An insulative layer 294 is formed underlying central portion 290 and a conductive portion 295 is formed underlying insulative layer 294 and is electrically insulated from resiliently deformable conductive element 246.

When the housing is closed and case-open switch actuation protrusions 114 engage corresponding protrusions 124 and cause displacement of corresponding case-open switch actuation responsive displaceable portions 122 in the direction indicated by arrow 128, conductive portion 295 of the resiliently deformable conductive element 246 establishes electrical contact with and between a corresponding pair of electrical contact pads 162 and 163 lying thereunder and does not establish electrical contact between contact pads 162 and 163 and ring 171 via flange portion 284. Accordingly the ring 171 and the contact pads 162 & 163 may be at different potentials.

Referring now specifically to Fig. 7, it is seen that one or more case-open switches 248, as well as one or more anti-tampering grids, such as grids 150 and 164, may be advantageously connected in series, parallel or a combination of series and parallel connections to anti-tampering circuitry 166 (Fig. 1B).

Each of case-open switches 248 preferably includes a resiliently deformable conductive element 246 and a corresponding pair of electrical contact pads 162 and 163 lying thereunder. Alternatively one or more anti-tampering grids may be separately connected to anti-tampering circuitry 166.

When the housing is opened, typically by at least approximately 0.75mm, one or more of the plurality of spaced case-open switch actuation protrusions 114 is retracted from one or more corresponding top facing protrusions 124 of one or more case-open switch actuation responsive displaceable portions 122, whose resilience causes corresponding retraction of one or more bottom facing protrusions 126, whose retraction results in conductive portion 295 of the resiliently deformable conductive element 246 breaking electrical contact with and between a corresponding pair of electrical contact pads 162 and 163 lying thereunder.

This disconnection is preferably sensed by anti-tamper protection circuitry 166, which is electrically connected thereto. Preferably, the electrical contact pads 162 and 163 are interconnected with anti-tamper protection circuitry 166 in a series connection.

In the illustrated embodiment of Fig. 7, preferably, anti-tamper protection circuitry 166 transmits a signal via tamper transmit pin Tamper XMTR, and compares the received signal on one or more of the tamper receive pins Tamper RCVR 1, 2 and 3. The signal transmitted by circuitry 166 may have a specific signal pattern, or, alternatively, a random or pseudo-random signal pattern, or may be any suitable combination of the foregoing. When the received signal deviates from the expected signal, anti-tamper protection circuitry 166 senses unauthorized opening of the housing.

Preferably, the anti-tamper protection circuitry 166 is operative, in the event of unauthorized opening on the housing, to perform at least one of the following actions: generate an alarm indication, disable the device and erase the sensitive data.

In accordance with an embodiment of the invention, anti-tamper protection circuitry 166 may also include the functionality of circuitry 168. As a further alternative, the electrical contact pads 162 and 163 and ring 171 of the case-open switches 248 may be connected to circuitry 168 and via circuitry 168 to anti-tamper protection circuitry 166.

It is a particular feature of an embodiment of the present invention that the resiliently deformable electrically conductive element 246, such as a dome, physically at least partially surrounds the contact assembly 170 thereby to discourage unauthorized physical or electrical contact therewith. Particularly, when all of domes are grounded, unauthorized tapping of electrical contact pads 162 and 163 of contact assemblies 170 is rendered difficult.

It is appreciated that circuitry including conductive contact assembly 170 identification by at least two indices, typically a row index and a column index, similar to the functionality of the circuitry described hereinabove with reference to Figs. 4A and 4B, in which each of electrical contact pads 162 is designated by a specific row index and each of electrical contact pads 163 is designated by a specific column index, may be employed in the contact assemblies 170 associated with case-open switches 248 to allow identification of the location of a case-open switch 248 that has been opened.

It is appreciated by persons skilled in the art that the present invention is not limited by what has been particularly shown and described hereinabove. Rather the scope of the present invention includes both combinations and subcombinations of various features described hereinabove as well as variations and modifications thereto which would occur to a person of skill in the art upon reading the above description and which are not in the prior art.

## Claims

1. A keypad comprising:
a keypad housing;
an array of data entry key assemblies mounted in said keypad housing, each of said data entry key assemblies being designated by at least two indices and comprising:
at least two mutually electrically insulated electrical contacts, each electrical contact being identified by one of said at least two indices; and
an electrically conductive element which, when depressed, is electrically coupled to said at least two mutually electrically insulated electrical contacts; and
an electrical circuit coupled to said array of data entry key assemblies, sensing a voltage state of specific ones of said at least two mutually electrically insulated electrical contacts, identified by specific ones of said indices, caused by depression of a specific electrically conductive element and indicating by said at least two indices the identity of a specific one of said data entry key assemblies which is actuated.

2. A keypad according to claim 1 and wherein said electrically conductive element is maintained at a first voltage when not depressed and, when depressed, is electrically coupled to said at least two mutually electrically insulated electrical contacts and is maintained at said first voltage.

3. A keypad according to claim 1 or claim 2 and wherein said electrically conductive element comprises a resiliently deformable electrically conductive element.

4. A keypad according to claim 1 and wherein said electrically conductive element is formed on a resiliently deformable element.

5. A keypad according to any of claims 1 - 4 and wherein at least one of said data entry key assemblies comprises at least three mutually electrically insulated electrical contacts.

6. A keypad according to claim 5 and wherein at least one of said at least three mutually electrically insulated electrical contacts is employed to provide power up/down functionality.

7. A keypad according to any of claims 1 - 6 and also comprising:
an array of case-open switch assemblies mounted in said keypad housing, each of said case-open switch assemblies being designated by at least two case-open switch indices and comprising:
at least two mutually electrically insulated electrical contacts, each electrical contact being identified by one of said at least two case-open switch indices; and
an electrically conductive element which, when depressed, is electrically coupled to said at least two mutually electrically insulated electrical contacts of said case-open switch assemblies; and
an electrical circuit coupled to said array of case-open switch assemblies, sensing a voltage state of specific ones of said at least two mutually electrically insulated electrical contacts of said case-open switch assemblies, identified by specific ones of said case-open switch indices, caused by mutual disengagement of said at least two mutually electrically insulated electrical contacts of said case-open switch assemblies and indicating by said at least two case-open switch indices the identity of a specific one of said case-open switch assemblies which is open.

8. A keypad according to claim 7 and wherein:
said electrically conductive element of said array of case-open switch assemblies comprises a resiliently deformable electrically conductive element and an electrical contact portion formed thereon; and
said electrically conductive element of said array of case-open switch assemblies is electrically insulated from said electrical contact portion by an electrically insulative layer.

9. A keypad according to claim 8 and wherein:
a first and a second of said at least two mutually electrically insulated electrical contacts of said array of case-open switch assemblies are respectively coupled to at least first and second voltages;
said electrically conductive element of said array of case-open switch assemblies is arranged to limit unauthorized physical access to said at least two mutually electrically insulated electrical contacts of said array of case-open switch assemblies and is maintained at a third voltage, different from said first and second voltages; and
said electrically conductive element of said array of case-open switch assemblies has at least two mechanical states:
a non-depressed state in which it is not in galvanic contact with either of said at least two electrically insulated electrical contacts of said array of case-open switch assemblies and is maintained at said third voltage; and
a depressed state in which it is in galvanic contact with at least one of said at least two electrically insulated electrical contacts of said array of case-open switch assemblies and is maintained at said third voltage.

10. A keypad according to any of claims 1 - 9 and wherein:
said at least two mutually electrically insulated electrical contacts of said array of data entry key assemblies are coupled to a first voltage; and
said electrically conductive element of said array of data entry key assemblies is coupled to a second voltage, wherein one of said first and second voltages is ground and the other of said first and second voltages is not ground.

11. A keypad according to claim 10 and wherein:
said at least two mutually electrically insulated electrical contacts of said array of data entry key assemblies are coupled to a voltage other than ground; and
said electrically conductive element of said array of data entry key assemblies is coupled to ground.

12. A keypad according to claim 10 and wherein:
said at least two mutually electrically insulated electrical contacts of said array of data entry key assemblies are coupled to ground; and
said electrically conductive element of said array of data entry key assemblies is coupled to a voltage other than ground.

13. A keypad according to any of claims 1 - 12 and wherein said at least two mutually electrically insulated electrical contacts of said array of data entry key assemblies are maintained in a logical high state other than when they are in electrical contact with said electrically conductive element of said array of data entry key assemblies.

14. A keypad according to any of claims 1 - 12 and wherein said at least two mutually electrically insulated electrical contacts of said array of data entry key assemblies are maintained in a logical low state other than when they are in electrical contact with said electrically conductive element of said array of data entry key assemblies.

15. A keypad according to any of claims 1 - 14 and wherein said electrically conductive element of said array of data entry key assemblies physically at least partially surrounds said at least two mutually electrically insulated electrical contacts of said array of data entry key assemblies, thereby preventing unauthorized physical or electrical contact therewith.

16. A keypad according to any of claims 1 - 15 and wherein said electrical circuit of said array of data entry key assemblies is operative to sense at least near simultaneous electrical engagement between said electrically conductive element of said array of data entry key assemblies and both of said at least two mutually electrically insulated electrical contacts of said array of data entry key assemblies.

17. A keypad according to any of claims 1 - 16 and also comprising an anti-tampering grid at least partially enclosing said array of data entry key assemblies and coupled to tamper indicating apparatus.

18. A keypad according to claim 1 and wherein said electrically conductive element comprises a resiliently deformable electrically conductive element which is coupled to ground and which, when depressed, grounds said at least two mutually electrically insulated non-grounded electrical contacts of said array of data entry key assemblies, said resiliently deformable electrically conductive element physically at least partially surrounding said at least two mutually electrically insulated non-grounded electrical contacts of said array of data entry key assemblies and preventing unauthorized physical or electrical contact therewith.

19. A secure keypad according to claim 18 and wherein said electrical circuit is operative to sense at least near simultaneous grounding of said at least two mutually electrically insulated non-grounded electrical contacts.
